(19) **Europäisches Patentamt / European Patent Office / Office européen des brevets**

(11) **EP 2 009 078 A1**

(12) # EUROPEAN PATENT APPLICATION

(43) Date of publication:
**31.12.2008 Bulletin 2009/01**

(51) Int Cl.:
***C09K 11/77*** *(2006.01)*

(21) Application number: **07111385.6**

(22) Date of filing: **29.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Leuchtstoffwerk Breitungen GmbH**
**98597 Breitungen (DE)**

(72) Inventors:
- **Duan, Cheng-Jun**
  **5612, AR Eindhoven (NL)**

- **Hintzen, Hubertus Theresia**
  **5646, Je Eindhoven (NL)**
- **Rösler, Sylke**
  **99817, Eisenach (DE)**
- **Rösler, Sven**
  **99817, Eisenach (DE)**
- **Starick, Detlef**
  **17489, Greifswald (DE)**

(74) Representative: **Engel, Christoph Klaus**
**Engel Patentanwaltskanzlei**
**Marktplatz 6**
**98527 Suhl/Thüringen (DE)**

(54) **Ce3+, Eu2+ -activated alkaline earth silicon nitride phosphors**

(57) The electronic structure of alkaline-earth silicon nitride $MSiN_2$ (M=Sr, Ba) was calculated using the CASTEP code. Both $BaSiN_2$ and $SrSiN_2$ are calculated to be intermediate band-gap semiconductors with a direct energy gap of about 2.9 eV for $BaSiN_2$ and 3.0 for $SrSiN_2$, as expected lower compared to the experimentally determined values (4.7 eV for $BaSiN_2$ and 4.8 eV for $SrSiN_2$). The luminescence properties of $Eu^{2+}$ and $Ce^{3+}$ activated $MSiN_2$ (M=Sr, Ba) have been studied. $M_{1-x}Eu_xSiN_2$ (0 < x = 0.1): $Eu^{2+}$ (M=Sr, Ba) can be efficiently excited in the UV to visible region (200 - 480 nm), making them attractive as conversion phosphors for LED applications. $Ba_{1-x}Eu_xSiN_2$ (0 < x = 0.1) shows a broad emission band in the wavelength range of 500-750 nm with maxima from 602 to 628 nm with increasing the Eu concentration, while $Sr_{1-x}Eu_xSiN_2$ (0 < x = 0.1) shows a broad emission band in the wavelength range of 550-850 nm with maxima from 670 to 685 nm with increasing the Eu concentration. $Ce^{3+}$-doped $MSiN_2$ (M=Sr, Ba) exhibits a broad emission band in the wavelength range of 400-700 nm with peak centre at 486 nm for $BaSiN_2$ and 534 nm for $SrSiN_2$. The long-wavelength excitation and emission of $Eu^{2+}$ and $Ce^{3+}$ ions in the host of $MSiN_2$ (M= Sr, Ba) are attributed to the effect of a high covalency and a large crystal field splitting on the 5d bands of $Eu^{2+}$ and $Ce^{3+}$ in the nitrogen environment.

Fig. 6

EP 2 009 078 A1

**Description**

**BACKGROUND**

Nitridosilicates, oxonitridosilicates, or oxonitridoalumino-silicates, which are derived from oxosilicates by formal exchanges of oxygen by nitrogen and/or silicon by aluminum, are of great interest owing to their outstanding thermal, chemical, and mechanical stability and structural diversity. Recently, these compounds have been extensively studied as host lattices for phosphors, which exhibit unusual, interesting luminescence properties when activated by rare earth ions, such as $M_2Si_5N_8$: $Eu^{2+}$, $Ce^{3+}$, $MSi_2O_{2-d}N_{2+2/3d}$: $Eu^{2+}$, $Ce^{3+}$ 3+ (M=Ca, Sr, Ba), $CaSiN_2$:$Eu^{2+}$, $Ce^{3+}$, $MgSiN_2$: $Eu^{2+}$, $MYSi_4N_7$ (M = Sr, Ba) : $Eu^{2+}$, $Ce^{3+}$, $MSi_xAl_{2-x}O_{4-x}N_x$: $EU^{2+}$ (M=Ca, Sr, Ba), a -SiAlON: RE (RE = $Eu^{2+}$, $Ce^{3+}$, $Yb^{2+}$, $Tb^{3+}$, $Pr^{3+}$, $Sm^{3+}$) . $\beta$-SiAlON: $Eu^{2+}$, and $CaAlSiN_3$:$Eu^{2+}$. Most importantly, these phosphors emit visible light efficiently under near-ultraviolet or blue light irradiation and have superior thermal and chemical stability to their oxide and sulfide counterparts, allowing them to be used as down-conversion luminescent materials for white light-emitting diodes (LEDs). A series of compounds $MSiN_2$ (M = Be, Mg, Ca, Sr, Ba) have been reported for many years but for which only the ordered wurtzite structures of $BeSiN_2$ and $MgSiN_2$ with three-dimensional frameworks of vertex-sharing $SiN_4$ tetrahedra are known. However, recently, the structure of $MSiN_2$ (M=Ca, Sr, Ba) has been solved for the single crystal, which has been grown form molten sodium at 900-1100 °C. $BaSiN_2$ crystallizes in space group Cmca. The structure consists of pairs of $SiN_4$ tetrahedra edge-linked to form bowtie-shaped $Si_2N_6$ dimers which share vertexes to form layers and has no analogue in oxide chemistry. $SrSiN_2$ has a distorted form of this structure and crystallizes in space group P21/c. In $MSiN_2$ (M=Sr, Ba), there is only one crystallographic M site. $CaSiN_2$ crystallizes in space group Pbca. The structure of $CaSiN_2$ contains only vertexsharing $SiN_4$ tetrahedra, linked to form a three-dimensional stuffed-cristobalite type framework isostructural with $KGaO_2$. No investigations have been focused on studying the photoluminescence properties of rare earth in the hosts of $MSiN_2$ (M=Sr, Ba)

**SUMMARY OF INVENTION**

This invention discloses alkaline earth silicon nitride phosphors that are activated by $Ce^{3+}$ and/or $E_u^{2+}$.

In a preferred embodiment of the invention, the phosphor shows one of the following formulas: $SrSiN_2$: $Eu^{2+}$, $BaSiN_2$ : $Eu^{2+}$, $SrSiN_2$:$Ce^{3+}$, $BaSiN_2$:$Ce^{3+}$.

In an embodiment of the invention, $SrSiN_2$ and $BaSiN_2$ are mixed to $Sr_{(1-x)}Ba_{(x)}SiN_2$ that provides a host lattice, wherein 0 =x = 1.

In a further embodiment of the invention, Sr-ions and/or Ba-ions are replaced partially or completely by divalent metal ions M like Mg, Ca, Zn, Be resulting in the following formula of the host lattice:

$$(Sr,\ Ba)_{(1-y)}M_{(y)}SiN_2\ wherein\ 0\ =\ y\ =1.$$

In a further embodiment of the invention, Si is replaced partially or completely by Ge resulting in the following formula of the host lattice:

$$(Sr,\ Ba)Si_{(1-z)}Ge_{(z)}N_2\ wherein\ 0\ =\ z\ =1.$$

In a further embodiment of the invention, $[(Sr, Ba)Si]^{6+}$ is replaced partially or completely by $(LaAl)^{6+}$ resulting in the following formula of the host lattice:

$$(Sr,\ Ba)_{(1-u)}La_{(u)}Si_{(1-u)}Al_{(u)}N_2\ wherein\ 0\ =\ u\ =1.$$

La can be replaced partially or completely by Sc, Y, and/or a lanthanide. Al can be replaced partially or completely by B, Ga, and/or Sc.

In a further embodiment of the invention, $[(Sr, Ba)Si]^{6+}$ is replaced partially or completely by $(NaP)^{6+}$ resulting in the following formula of the host lattice:

$$(Sr, Ba)_{(1-v)} Na_{(v)} Si_{(1-v)} P_{(v)} N_2 \text{ wherein } 0 = v = 1.$$

Na can be replaced partially or completely by Li, K, Rb, and/or Cs.

In a further embodiment of the invention, $[(Sr, Ba)N]^-$ is replaced partially or completely by $(NaO)^-$ resulting in the following formula of the host lattice:

$$(Sr, Ba)_{(1-w)} Na_{(w)} SiN_{(2-w)} O_{(w)} \text{ wherein } 0 = w = 1.$$

Na can be replaced partially or completely by Li, K, Rb, and/or Cs.

In a further embodiment of the invention, $(SiN)^+$ is replaced partially or completely by $(AlO)^+$ resulting in the following formula of the host lattice:

$$(Sr, Ba) Si_{(1-r)} Al_{(r)} N_{(2-r)} O_{(r)} \text{ wherein } 0 = r = 1.$$

Al can be replaced partially or completely by B, Ga, and/or Sc.

In all cases, the respective host lattices of the phosphor compositions are activated by $Ce^{3+}$ and/or $Eu^{2+}$ ions. The activator concentration covers the range from more largely zero up to 0.5 atomic portions, or in another embodiment of the invention, from more largely zero up to 50 atomic per cent. In a further embodiment of the invention, the concentration of the activator ions is more than 50 atomic percent.

In a further embodiment of the invention, other rare earth ions like Ce, Yb, Tb, Gd, Dy, Sm or others are included in the phosphor in order to act as co-activator and/or sensitizer.

In a further embodiment of the invention, transition metal ions like Mn, V, Nb, or others and/or main group elements like, Bi, Sb, or others are included in the phosphor in order to act as co-activator and/or sensitizer. The concentrations of the co-activators and/or sensitizers are likewise accurately specified. In an embodiment of the invention, these concentrations are adjusted in a range from larger/directly zero up to 50 atomic per cent.

In a general embodiment of the invention, the Si/M ratio in the phosphor is 1 (M= Sr, Ba). In particular embodiments of the invention, the Si/M ratio is extended to higher Si/M values, e.g., Si/M = 2.5 (i.e. $M_2Si_5N_8$) and Si/M = 7 (i.e. $MSi_7N_{10}$). These compounds can be mixed with $MSiN_2$.

In a further embodiment of the invention, the phosphor is protected against harmful environmental conditions like moisture, reactive gases, reactive chemicals etc. by surface coating or particle encapsulation with relevant organic or inorganic compounds. For the coating for example fluorides, phosphates, oxides or nitrides of the elements Al, Si, Ti, Y, La, Gd or Lu can be used, if they protect the phosphor particles reliably and if they exhibit optical windows for the excitation and for the emission radiation at the same time.

The coating or encapsulation can be realized for example with the help of chemical vapour deposition (CVD) or plasma enhanced CVD (PECVD).

The applied coating materials and methods are not limited to the indicated examples.

The inventive phosphor may be synthesised by methods using Sr-nitride, Eu-nitride and $Si_3N_4$. Furthermore, the inventive phosphor may be synthesised by methods starting with $Si_3N_4$, Eu-nitride and Sr metal, which is in situ nitrided. Also, mixtures of Si/Eu/Sr may be nitrided. Further, mixtures of C or C-containing substances like SiC as well as $SiO_2$, $Eu_2O_3$ and/or SrO may be carbothermally reduced and nitrided. An ammonolysis of $/SiO_2/Eu_2O_3/SrO$ mixtures may be performed in $NH_3$ gas atmosphere. Furthermore, CVD reactions between Sr/Eu/Si-precursors and $NH_3$ may be performed. Fluxes may be used in order to control particle shape and particle size distribution.

Eu and Ce-doped $MSiN_2$ (M=Ba, Sr) phosphors can be prepared by the following way. The binary nitride precursors $SrN_x(x~0-0.66)$, $BaN_x(x~0-0.66)$ and $EuN_x$ ($x~0-1.0$) were pre-prepared by the reaction of the pure strontium metal (Aldrich, 99.9 %, pieces), barium metal (Aldrich, 99.9 %, pieces) and Eu metal (Csre, 99.9 %, lumps) under flowing dried nitrogen at 800, 550, and 800 °C, respectively, for 12 h in a horizontal tube furnace. In addition, a-$Si_3N_4$ powder (Permascand, P95H, a content 93.2 %; Oxygen content: ~1.5), Ce (Alfa, >99 %, lumps) and Li (Merck, >99 %, lumps) are used as the as-received raw materials.

Polycrystalline $M_{1-x}Eu_xSiN_2$ (0 = x = 0.1) and $M_{1-2x}Ce_xLi_xSiN_2$ (0 = x = 0.02) powders were prepared by a solid state reaction method at high temperature. The appropriate amounts of metal (Ce, Li), $SrN_x$, $BaN_x$ and $EuN_x$ as well as a-$Si_3N_4$ powders were weighed out and subsequently mixed and ground together in an agate mortar. The powder mixtures were then transferred into molybdenum crucibles. All processes were carried out in a purified-nitrogen-filled glove-box. Subsequently those powder mixtures were fired in a horizontal tube furnace at 1250 °C for 16 h under flowing 90 % $N_2$-10 % $H_2$ atmosphere. After firing, the samples were gradually cooled down to the room temperature in the furnace. There was no apparent reaction of the prepared nitrides with the Mo crucibles.

Quantities for raw materials of $BaSiN_2:Eu^{2+}$ are for example:

(1)    $BaSiN_2:Eu^{2+}$ (1mol %) 0.01 mol

$BaN_{0.685}$=1.4545 g

a-$Si_3N_4$=0.4677 g

$EuN_{0.94}$=0.0165 g

(2)    $BaSiN_2:Eu^{2+}$ (2mol %) 0.005 mol

$BaN_{0.633}$=0.7164 g

a-$Si_3N_4$=0.2339 g

$EuN_{0.94}$=0.0165 g

(3)    $BaSiN_2:Eu^{2+}$ (3mol %) 0.01 mol

$BaN_{0.685}$=1.4251 g

a-$Si_3N_4$=0.4677 g

$EuN_{0.94}$=0.0495 g

Quantities for raw materials of $SrSiN_2:Eu^{2+}$ are for example:

(1)    $SrSiN_2:Eu^{2+}$ (1mol %) 0.01 mol

$SrN_{0.3726}$=0.9191 g

a-$Si_3N_4$=0.4677 g

$EuN_{0.94}$=0.0165 g

(2)    $SrSiN_2:Eu^{2+}$ (2mol %) 0.01 mol

$SrN_{0.5036}$=0.9278g

a-$Si_3N_4$=0.4677 g

$EuN_{0.94}$=0.033 g

(3)     $SrSiN_2:Eu^{2+}$ (3mol %) 0.01 mol

$SrN_{0.3726}$=0.9005 g

$a-Si_3N_4$=0.4677 g

$EuN_{0.94}$=0.0495 g

In an embodiment of the invention, the phosphor shows excitation bands in the range of 200-480 nm.

On the other side, it could be shown that the phosphors of the invention exhibit an intensive luminescence when they are excited with cathode (CR) or X-ray radiation. Since nitrides in general have a lower band gap energy (related to other host lattices), a higher energy conversion efficiency is expected.

Due to the described luminescence characteristics the phosphor according to the present invention can be used as a radiation converter for the transformation of cathode or X-rays, UV, violet or blue radiation into a longer-wave visible light that is emitted by the phosphor preferably in green to red spectral region.

The inventive phosphor can be used in technical devices like cathode ray tubes (CRT), X-ray intensifying screens or other X-ray image converters, special laser based large screen displays, fluorescent lamps, coloured light or white emitting LED's, and photovoltaic cells or greenhouse foils or glasses and many more.

The inventive phosphor can be exited by excitation sources like electron or X-ray generators, high or low-pressure discharge plasmas, UV or blue emitting organic or inorganic light emitting diodes (LED) or appropriate lasers or laser diodes, or in addition, inorganic thin or thick electroluminescent screens.

The application of the inventive phosphors is not limited to the indicated examples.

The inventive phosphor can be used as single component in a relevant light emitting element or in combination with other red yellow, green, and/or blue-emitting phosphors in order to improve the performance of the respective application. The latter meets for example the improvement of the colour rendering indices (CRI) of fluorescent lamps and white emitting LED's.

All measurements were performed on finely ground samples, which were analyzed by X-ray powder diffraction (Rigaku, D/MAX-B) using Cu-K$_a$ radiation at 40 kV and 30 mA with a graphite monochromator. The phase formation is checked by the normal scan (0.6°/min) in the range of 10-90° 2?. All the XRD measurements were performed at room temperature in the air. All the samples are shown to be pure phases and the powder X-ray diffraction patterns of undoped or doped $SrSiN_2$ and $BaSiN_2$ samples are in good agreement with the reported powders patterns in JCPDS 22-1438 and 36-1257, respectively.

The diffuse reflectance, emission and excitation spectra of the samples were measured at room temperature by a Perkin Elmer LS 50B spectrophotometer equipped with a Xe flash lamp. The reflection spectra were calibrated with the reflection of black felt (reflection 3%) and white barium sulfate ($BaSO_4$, reflection ~100 %) in the wavelength region of 230-700 nm. The excitation and emission slits were set at 15 nm. The emission spectra were corrected by dividing the measured emission intensity by the ratio of the observed spectrum of a calibrated W-lamp and its known spectrum from 300 to 900 nm. Excitation spectra were automatically corrected for the variation in the lamp intensity by a second photomultiplier and a beam-splitter. All the spectra were measured with a scan speed of 400 nm/min. All of the luminescence spectra were recorded at room temperature in air.

**BRIEF DESCRIPTION OF THE DRAWINGS**

The foregoing and other features and advantages of the present invention will become more readily appreciated as the same become better understood by reference to the following detailed description of the preferred embodiment of the invention when taken in conjunction with the accompanying drawings, wherein:

Fig. 1    Diffuse reflection spectra of $M_{1-x}Eu_xSiN_2$:

(a) M=Sr, (b) M =Ba.

Fig. 2    Diffuse reflection spectra of $M_{0.96}Ce_{0.02}Li_{0.02}SiN_2$ (M= Sr, Ba).

Fig. 3    Emission spectra of $M_{1-x}Eu_xSiN_2$ under excitation wavelength of 400 nm: (a) M=Sr, (b) M =Ba.

Fig. 4    Excitation spectra of $M_{1-x}Eu_xSiN_2$ :

(a) M=Sr, (b) M =Ba.

Fig. 5     the emission intensities of $M_{1-x}Eu_xSiN_2$ under excitation wavelength of 400 nm and the changes in Stokes shift as a function of the Eu concentration: (a) M=Sr, (b) M =Ba.

Fig. 6     Typical excitation and emission spectra of $SrSiN_2$: Ce, Li; and

Fig. 7     Typical excitation and emission spectra of $BaSiN_2$: Ce, Li.

## DETAILED DESCRIPTION

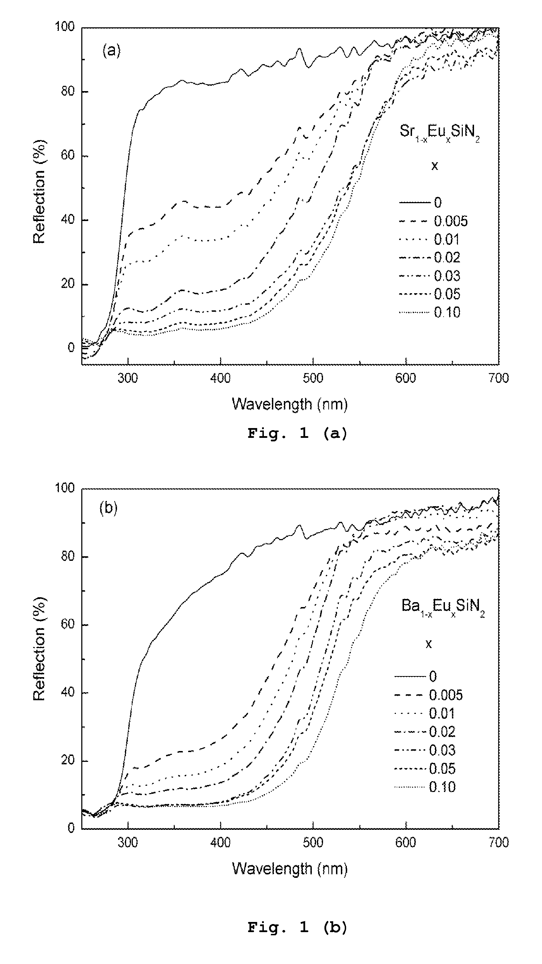

Fig. 1 shows the diffuse reflection spectra of undoped and $Eu^{2+}$-doped $MSiN_2$ (M = Sr, Ba) samples. Fig 1 (a) shows the diffuse reflection spectrum of undoped and $Eu^{2+}$-doped $SrSiN_2$ samples. Fig 1 (b) shows the diffuse reflection spectrum of undoped and $Eu^{2+}$-doped $BaSiN_2$ samples. Both undoped and $Eu^{2+}$-doped samples show a remarkable drop in reflection in the UV range around 300 nm with an estimated band gap at about 258 nm (~4.8 eV) for M = Sr, 266 nm (4.7 eV) for M = Ba, corresponding to the valence-to-conduction band transitions of the $MSiN_2$ host lattice. The intense reflection in the visible spectral range is in agreement with the observed grey-white daylight color for undoped $MSiN_2$. Obviously, two broad absorption bands can be seen from the reflection spectra of low Eu concentration samples. One is the main absorption in the wavelength range of 350-490 nm, another is a short-wavelength absorption band in the wavelength rang of 300-360 nm. The two broad absorption bands both can be attributed to the absorption of the $Eu^{2+}$ ions due to the absence of them in undoped $MSiN_2$ samples. Moreover, the intensities of them increase for higher Eu concentration. In contrast to the undoped samples, the daylight color of $M_{1-x}Eu_xSiN_2$ shows light orange to orange for M = Sr and yellow to orange for M = Ba varying with the Eu concentration (0 < x = 0.1) as a result of a strong absorption in the visible range around 350 - 490 nm. Additionally, the onset of the reflection drop significantly shifts to a longer-wavelength as the Eu concentration increases indicating that the absorption range can be tailored by the Eu content.

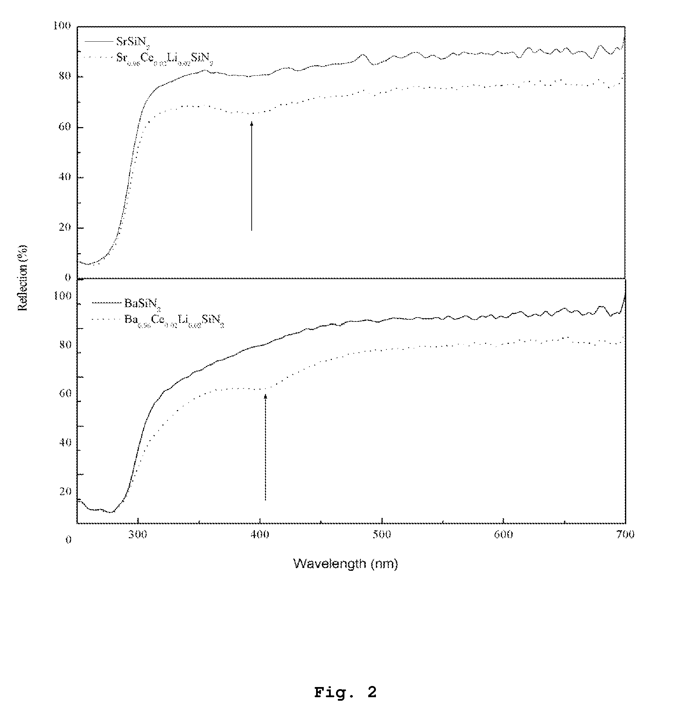

Fig. 2 shows the typical diffuse reflection spectra of $Ce^{3+}$ and $Li^+$-codoped $MSiN_2$ (M=Sr, Ba). The diffuse reflection spectra of undoped samples were also plotted as a comparison. The intense reflection in the visible spectral range is in agreement with the observed grey-white daylight color for $Ce^{3+}$-doped $MSiN_2$. It is interesting to note that the $Ce^{3+}$ ion shows absorption in the UV-blue range (around 400 nm) in both $SrSiN_2$ and $BaSiN_2$ hosts.

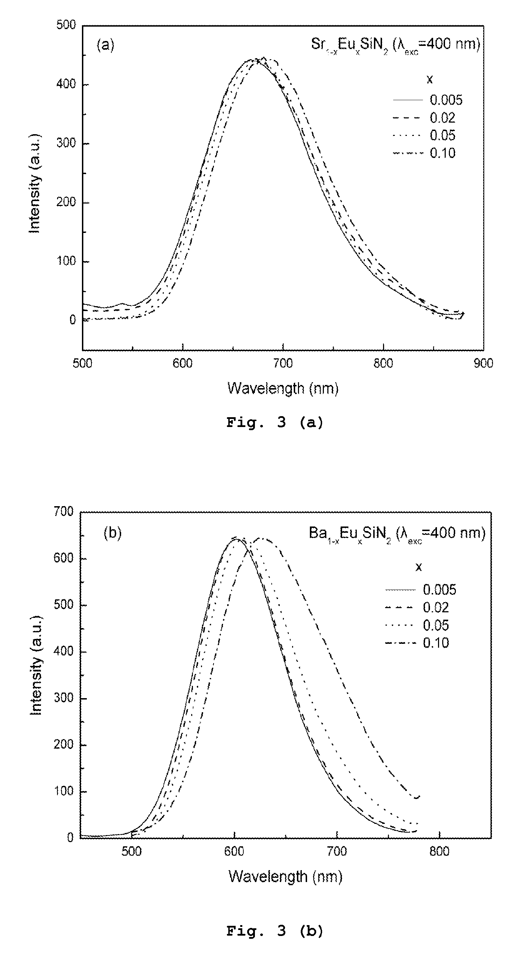

Fig. 3 (a) and (b) show the typical emission spectra of $Sr_{1-x}Eu_xSiN_2$ and $Ba_{1-x}Eu_xSiN_2$ (0 < x = 0.1), respectively. Eu is present as the divalent ion in both Eu-doped $BaSiN_2$ and $SrSiN_2$ samples due to the absence of sharp f-f transition lines characteristic for $Eu^{3+}$ in their emission spectra. As a result, all the broad emissions in the sample of $M_{1-x}Eu_xSiN_2$ (0 < x = 0.1) : $Eu^{2+}$ (M=Sr, Ba) are essentially assigned to the $4f^65d^1$ ? $4f^7$ transition of the $Eu^{2+}$ ion. $Sr_{1-x}Eu_xSiN_2$ (0 < x = 0.1) shows a broad emission band in the wavelength range of 550-850 nm with maxima from 670 to 685 nm with increasing the Eu concentration, while the sample of $Ba_{1-x}Eu_xSiN_2$ (0 < x = 0.1) shows a broad emission band in the wavelength range of 500-750 nm with maxima from 602 to 628 nm with the increasing the Eu concentration. The reasons for the red shift will be discussed in detail below.

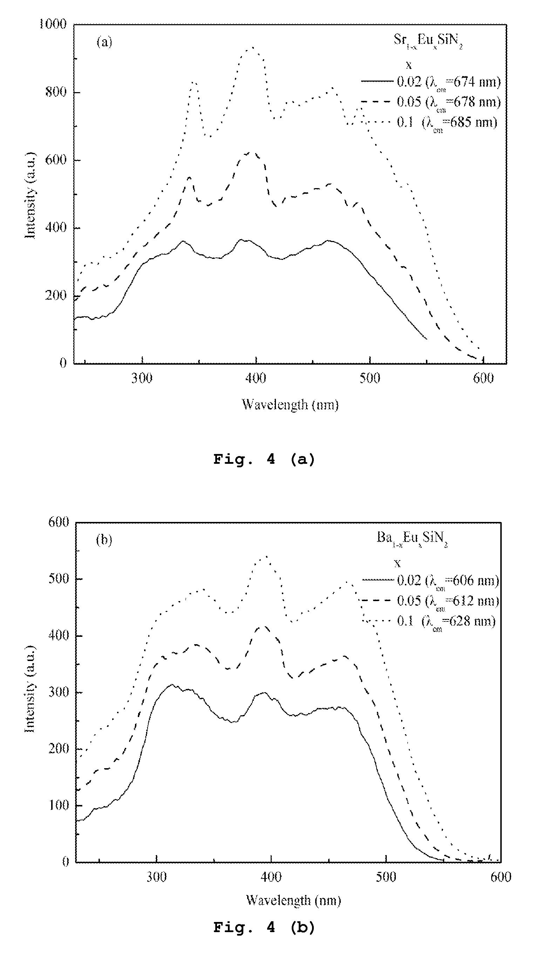

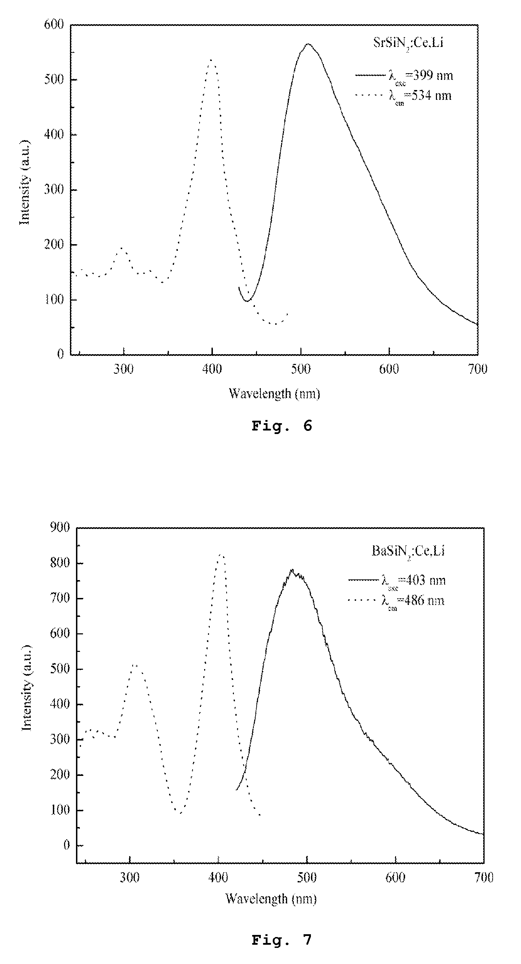

Typical excitation spectra of $MSiN_2$: $Eu^{2+}$ (M= Sr, Ba) are presented in Fig. 4. In Fig. 4 (a), typical excitation spectra of $SrSiN_2$: $Eu^{2+}$ are shown. In Fig. 4 (b), typical excitation spectra of $BaSiN_2$: $Eu^{2+}$ are shown. Roughly speaking, there are four dominated broad bands in the excitation spectra of $MSiN_2$: $Eu^{2+}$ (M= Sr, Ba). The position of these excitation bands is almost independent of the type of the M ions, the Eu concentration and the crystal structure, peaking at about 303, 340, 395 and 466 nm. Several weak excitation bands below 275 nm are readily assigned to the host lattice excitation (e.g. transition from the valence to conduction band for the $MSiN_2$ host lattices), which have also been observed in the excitation spectra of $Ce^{3+}$-doped $MSiN_2$ sample, as shown in Figures 6 and 7. The appearance of the excitation band of the host lattice in the excitation spectrum of $Eu^{2+}$ indicates that there exists energy transfer from host lattice to $Eu^{2+}$ ions. The remaining excitation bands in the wavelength range of 300-550 nm clearly originate from the $4f^7$ ? $4f^65d^1$ transition of $Eu^{2+}$. Similarly, the most intense 5d excitation band of $Eu^{2+}$ is located at about 395 nm in $MSiN_2$:$Eu^{2+}$. The lowest energy levels of the 5d excitation band (very broad at about 420 - 550 nm) seem to be further decomposed into five subbands, especially for M = Sr at higher Eu concentrations. In addition, with increasing $Eu^{2+}$ concentration these subbands at longer wavelength become more intense, which suggests that $Eu^{2+}$ self-absorption possibly occurs for higher Eu concentration. The 5d excitation band of the $Eu^{2+}$ ions at lower energy (> 400 nm) is attributed to the influence of highly covalent bonding of $M_{Eu}$-N and a large crystal-field splitting due to the presence of nitrogen. Moreover, the absence of significant changes in the position and shape of the excitation band suggests that the covalency of the Eu-N bonds and the crystal field strength around the $Eu^{2+}$ ions are very similar in the $MSiN_2$ series. The crystal-field splitting estimated from the energy difference between highest and lowest observed 5d excitation levels of $Eu^{2+}$ is calculated to be about 11600 $cm^{-1}$ for both $SrSiN_2$ and $BaSiN_2$ assuming no 5d subbands in conduction band of host lattice.

Here, it is worth noting that $MSiN_2$:$Eu^{2+}$ (M = Sr, Ba) has not only high absorption but also efficient excitation in the same spectral region of 300- 490 nm, perfectly matching with the radiative light from the InGaN or GaN-based LEDs. Thus, $MSiN_2$:$Eu^{2+}$ (M = Sr, Ba) shows high potential for white LED applications.

The red shift in emission spectrum is frequently observed in rare-earth-doped phosphors as the dopant level increases. Several phenomena can contribute to red shift, such as the change of crystal field strength, Stokes Shift and reabsorption and so on. It is often ascribed to the changes in crystal field strength surrounding the activators because the incorporation of dopants into the lattice would cause the expansion or shrinkage of the unit cell, the changes in the bond length, covalency, and symmetry, and so on. One of the phenomenological characteristics of the variation of the crystal field strength is the significant changes in the position and shape of the excitation band. However, in our case the excitation spectrum hardly varies except for intensity changes as a function of the Eu concentration, indicative of no significant changes in crystal field strength.

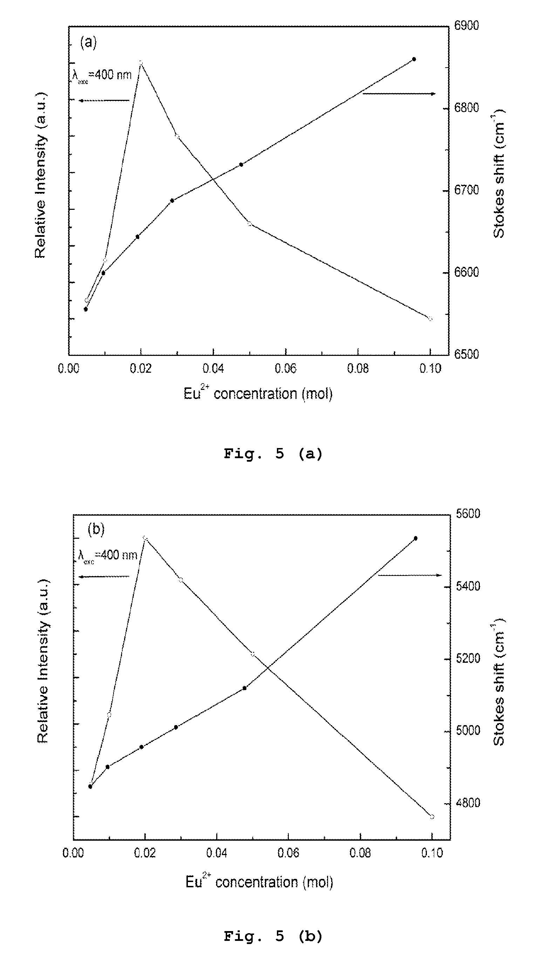

Fig. 5 (a) shows the Stokes shift calculated from the energy difference between the lowest 5d excitation and emission of $Eu^{2+}$ as a function of the $Eu^{2+}$ concentration in the host of $SrSiN_2$. Fig. 5 (b) shows the Stokes shift calculated from the energy difference between the lowest 5d excitation and emission of $Eu^{2+}$ as a function of the $Eu^{2+}$ concentration in the host of $BaSiN_2$. It is clearly seen that the Stokes shift increases with increasing the $Eu^{2+}$ concentration. Based on the fact that the crystal field strength does not change greatly, the observed red shift is therefore dominantly attributed to the increased Stokes shift. Of course, some additional contribution of reabsorption to the observed red shift cannot be ruled out, which has been supported by their excitation spectra.

Fig. 5 (a) and (b) also show the emission intensity of $M_{2-x}Eu_xSiN_2$ (0 < x = 0.1) : $Eu^{2+}$ (M=Sr, Ba) as a function of Eu concentration under excitation wavelength of 400 nm. For both $SrSiN_2$ and $BaSiN_2$, the optimal emission intensity is observed for the material doped with 2 atom % Eu (i.e., x=0.02). The emission intensity declines intensively as the concentration of $Eu^{2+}$ exceeds 2 atom % due to concentration quenching.

Table 1 summaries the composition, phase characteristics and luminescence properties of $Eu^{2+}$-doped $MSiN_2$ (M=Mg, Ca, Sr, Ba) for a comparison.

**Table 1:** Composition, phase characteristics and photoluminescence properties of $Eu^{2+}$-doped $MSiN_2$ (M=Mg, Ca, Sr, Ba) at room temperature

| $M_{1-x}Eu_xSiN_2$ | M=Mg 0 < x = 0.15 | M=Ca | M=Sr 0 < x = 0.1 | M=Ba 0 < x = 0.1 |
|---|---|---|---|---|
| Phase | $MgSiN_2$ | $CaSiN_2$ | $SrSiN_2$ | $BaSiN_2$ |
| Body color | - | - | Light to orange to orange | Yellow to orange |
| Crystal system | $Pna2_1$ | F 4b3m | $P2_1/c$ | Cmca |
| Host lattice band gap (eV) | 4.8 | 4.5 | 4.8 | 4.7 |
| Absorption bands of $Eu^{2+}$ (nm) | 275-410 | - | 300-490 | 300-490 |
| Eu 5d excitation bands (nm) | 277, 293, 316, 340, 375 | - | 303, 340, 395, 466 | 303, 340, 395 , 466 |
| Emission band maximum (nm) | 517 | 620 | 670-685 | 602-628 |
| Crystal field splitting ( $cm^{-1}$)[*1] | 9434 | - | 11600 | 11600 |
| Stokes shift ($cm^{-1}$) [*2] | 7300 | - | 6500-6900 | 4850-5550 |

[*1] Crystal-field splitting estimated from the energy difference between highest and lowest observed 5d excitation levels of $Eu^2$

[*2] Stokes shift calculated from the energy difference between the lowest 5d excitation level and emission band of $Eu^{2+}$

Fig. 6 shows the typical excitation and emission spectra of $SrSiN_2$: Ce, Li. The sample displays a broad emission band in the wavelength range of 400-700 nm with a peak center at about 534 nm. On an energy scale, this broad emission band can be decomposed into two well-separated Gaussian components with maxima at about 20000 and 18050 $cm^{-1}$ (corresponding to 500 and 554 nm, respectively). According to reference, there is only one crystallographic Sr site in the crystal structure of $SrSiN_2$- It is believed that the $Ce^{3+}$ ions would replace the site of $Sr^{2+}$ ions in the host of $SrSiN_2$. Thus, there is only one crystallographic site for $Ce^{3+}$ in the host of $SrSiN_2$. Therefore, the two separated Gaussian components can be attributed to the transition from the lowest 5d level to the $^2F_{5/2}$ and $^2F_{7/2}$ levels of $Ce^{3+}$ in the host

of SrSiN$_2$. The energy gap is about 1950 cm$^{-1}$, which is in agreement with the theoretical difference between the $^2F_{5/2}$ and $^2F_{7/2}$ levels (~2000 cm$^{-1}$). Three distinct bands can be observed with maxima at 298, 330 and 399 nm, respectively, plus some weak excitation bands below 275 nm in the excitation spectrum of SrSiN$_2$ (Figure 6). Definitely, these weak excitation bands below 275 nm originate from the host lattice, which has also been observed in the excitation spectra of Eu$^{2+}$-doped MSiN$_2$ samples. The remaining excitation bands in the wavelength range of 275-450 nm are assigned to Ce$^{3+}$ 4f?5d transitions separated by crystal field splitting of the 5d state. The crystal field splitting of the 5d state and Stokes shift of Ce$^{3+}$ ion in the host of SrSiN$_2$ were calculated to be about 8500 cm$^{-1}$ and 6336 cm$^{-1}$, respectively.

Fig. 7 shows the typical excitation and emission spectra of BaSiN$_2$: Ce, Li. The sample exhibits a broad emission band in the wavelength range of 400-700 nm with peak center at about 486 nm. Similar to the broad emission band of Ce$^{3+}$ in the host of SrSiN$_2$, this broad emission can also be well decomposed into two well-separated Gaussian components with maxima at about 20750 and 18400 cm$^{-1}$ (corresponding to 482 and 544 nm, respectively) on an energy scale. There is only one crystallographic Ba site in the crystal structure of BaSiN$_2$, so the two separated Gaussian components can also be attributed to the transition from the lowest 5d level to the $^2F_{5/2}$ and $^2F_{7/2}$ of Ce$^{3+}$ in the host of BaSiN$_2$. The energy gap is about 2350 cm$^{-1}$, which is in agreement with the theoretical difference between the $^2F_{5/2}$ and $^2F_{7/2}$ levels (~2000 cm$^{-1}$). Two distinct excitation bands are detected with maxima around 305 and 403 nm, respectively, plus some weak bands below the wavelength range of 275 nm. Similar to the case of SrSiN$_2$:Ce, Li, these weak excitation bands and the remaining excitation bands in the wavelength range of 275-450 nm are assigned to the host lattice excitation and Ce$^{3+}$ 4f ? 5d transitions separated by crystal field splitting of the 5d state, respectively. The crystal field splitting of the 5d state and Stokes shift of Ce$^{3+}$ in the host of BaSiN$_2$ were calculated to be about 7973 and 4300 cm$^{-1}$, respectively. Table 2 summaries the composition, phase characteristics and luminescence properties of Ce$^{3+}$-doped MSiN$_2$ (M=Ca, Sr, Ba) for a comparison.

Table 2: Composition, phase characteristics and typical photoluminescence properties of Ce$^{3+}$-doped MSiN$_2$ (M=Ca, Sr, Ba) at room temperature

| MSiN$_2$:Ce$^{3+}$ | M= Ca | M= Sr | M= Ba |
|---|---|---|---|
| Phase | CaSiN$_2$ | SrSiN$_2$ | BaSiN$_2$ |
| Crystal System | Face-centered cubic | P21/c | Cmca |
| Body color | Pink / red | Grey-White | Grey-White |
| Host lattice band gap (eV) | - | 4.8 | 4.7 |
| Absorption bands of Ce$^{3+}$ (nm) | 450-550 | 370- 420 | 370- 420 |
| Ce 5d excitation bands (nm) | 365, 390, 440, 535 | 298, 330, 399 | 305, 403 |
| Emission band maximum (nm) | 625 | 534 | 486 |
| Crystal field Splitting (cm$^{-1}$)*1 | 8705 | 8500 | 7973 |
| Stokes shift (cm$^{-1}$)*2 | 2700 | 6336 | 4300 |
| *1 Crystal-field splitting estimated from the energy difference between highest and lowest observed 5d excitation levels of Ce$^{3+}$ *2 Stokes shift calculated from the energy difference between the lowest 5d excitation level and emission band of Ce$^{3+}$ | | | |

Finally, it is worthwhile to mention that the absorption and the excitation bands of MSiN$_2$:Ce$^{3+}$, Li$^+$ perfectly match with the radiation of the GaN based LEDs in the range of 370-420 nm, so in combination with other phosphors these materials are capable of generating white light.

The luminescence properties of Eu$^{2+}$ and Ce$^{3+}$ in the host of MSiN$_2$ (M = Sr, Ba) were investigated. Eu-doped MSiN$_2$ (M = Sr, Ba) shows a typical broad band emission of Eu$^{2+}$ in the spectral range from orange to deep red (600 - 690 nm). With increasing Eu concentration, the emission band of MSiN$_2$: Eu$^{2+}$ (M = Sr, Ba) shifts to long-wavelength depending on the type of M ion and the Eu concentration. This red-shift is attributed to an increase of the Stokes shift and reabsorption by Eu$^{2+}$. The high absorption and efficient excitation bands of MSiN$_2$:Eu$^{2+}$ (M = Sr, Ba) in the wavelength of 300 - 490 make them attractive as conversion phosphors for LED applications. Ce$^{3+}$-doped MSiN$_2$ (M=Sr, Ba) exhibits a broad emission band in the wavelength range of 400-700 nm with peak centre at 486 nm for BaSiN$_2$ and 534 nm for

SrSiN$_2$.

**Claims**

1. An alkaline earth silicon nitride phosphor that is activated by Ce$^{3+}$ and/or Eu$^{2+}$.

2. The phosphor according to claim 1, wherein the phosphor shows one of the following formulas: SrSiN$_2$:Eu$^{2+}$, BaSiN$_2$ : Eu$^{2+}$, SrSiN$_2$ : Ce$^{3+}$, BaSiN$_2$ : Ce$^{3+}$.

3. The phosphor according to claim 1, wherein the host lattice of the phosphor is represented by the formula Sr$_{(1-x)}$Ba$_{(x)}$SiN$_2$, wherein $0 \leq x \leq 1$.

4. The phosphor according to one of the claims 1 to 3, wherein Si is replaced partially or completely by Ge resulting in the following formula of the host lattice (Sr, Ba) Si$_{(1-z)}$Ge$_{(z)}$N$_2$ wherein $0 \leq z \leq 1$.

5. The phosphor according to one of the claims 2 to 4, wherein Sr ions and/or Ba ions are replaced partially or completely by divalent metal ions M like Mg, Ca, Zn, Be resulting in the following formula of the host lattice (Sr, Ba) $_{(1-y)}$M$_{(y)}$SiN$_2$ wherein $0 \leq y \leq 1$.

6. The phosphor according to one of the claims 2 to 5, wherein [(Sr, Ba)Si]$^{6+}$ is replaced partially or completely by (LaAl)$^{6+}$ resulting in the following formula of the host lattice (Sr, Ba)$_{(1-u)}$La$_{(u)}$Si$_{(1-u)}$Al$_{(u)}$N$_2$ wherein $0 \leq u \leq 1$, and wherein La is optionally replaced partially or completely by Sc, Y and/or a lanthanide, and wherein Al is optionally replaced partially or completely by B, Ga and/or Sc.

7. The phosphor according to one of the claims 2 to 5, wherein [(Sr, Ba)Si]$^{6+}$ is replaced partially or completely by (NaP)$^{6+}$ resulting in the following formula of the host lattice (Sr, Ba)$_{(1-v)}$Na$_{(v)}$Si$_{(1-v)}$P$_{(v)}$N$_2$ wherein $0 \leq v \leq 1$, and wherein Na is optionally replaced partially or completely by Li, K, Rb, and/or Cs.

8. The phosphor according to one of the claims 2 to 6, wherein [(Sr, Ba)N]$^-$ is replaced partially or completely by (NaO)$^-$ resulting in the following formula of the host lattice (Sr, Ba) $_{(1-w)}$Na$_{(w)}$SiN$_{(2-w)}$O$_{(w)}$ wherein $0 \leq w \leq 1$, and wherein Na is optionally replaced partially or completely by Li, K, Rb, and/or Cs.

9. The phosphor according to one of the claims 2 to 8, wherein the ratio of Si to (Sr, Ba) is more than 1.

10. A white-light emitting LED comprising a light emitting element and a first phosphor according to one of the claims 1 to 9, wherein said first phosphor is further combined with red, yellow, green, and/or blue-emitting phosphors.

Fig. 1 (a)

Fig. 1 (b)

Fig. 2

Fig. 3 (a)

Fig. 3 (b)

**Fig. 4 (a)**

**Fig. 4 (b)**

Fig. 5 (a)

Fig. 5 (b)

Fig. 6

Fig. 7

**European Patent Office**

**EUROPEAN SEARCH REPORT**

Application Number

EP 07 11 1385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/049763 A (MATSUSHITA ELECTRIC IND CO LTD [JP]; OSHIO SHOZO) 2 June 2005 (2005-06-02) * claim 14 * | 1-10 | INV. C09K11/77 |
| X | WO 2005/103199 A (MATSUSHITA ELECTRIC IND CO LTD [JP]; OSHIO SHOZO) 3 November 2005 (2005-11-03) * claim 32 * | 1-10 | |
| X | KOTLYARCHUK, BOHDAN K.; POPOVYCH, DMYTRO I.: PROCEEDINGS OF SPIE-THE INTERNATIONAL SOCIETY FOR OPTICAL ENGINEERING, vol. 4148, 2000, pages 247-251, XP002452603 page 247, item 2 | 1-10 | |

TECHNICAL FIELDS SEARCHED (IPC)

C09K

The present search report has been drawn up for all claims

| Place of search | Date of completion of the search | Examiner |
|---|---|---|
| Munich | 26 September 2007 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 07 11 1385

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2007

| Patent document cited in search report | | Publication date | Patent family member(s) | | Publication date |
|---|---|---|---|---|---|
| WO 2005049763 | A | 02-06-2005 | EP<br>JP<br>KR<br>US | 1685211 A1<br>2007511452 T<br>20060109431 A<br>2007040152 A1 | 02-08-2006<br>10-05-2007<br>20-10-2006<br>22-02-2007 |
| WO 2005103199 | A | 03-11-2005 | EP<br>KR | 1749074 A1<br>20070004101 A | 07-02-2007<br>05-01-2007 |

EPO FORM P0459

For more details about this annex : see Official Journal of the European Patent Office, No. 12/82